(19) **Europäisches Patentamt / European Patent Office / Office européen des brevets**

(11) **EP 4 524 905 B1**

(12) **EUROPEAN PATENT SPECIFICATION**

(45) Date of publication and mention
of the grant of the patent:
**25.02.2026 Bulletin 2026/09**

(21) Application number: **24189036.7**

(22) Date of filing: **16.07.2024**

(51) International Patent Classification (IPC):
$G06V\ 10/82$ (2022.01)      $G06V\ 10/98$ (2022.01)
$G06V\ 20/56$ (2022.01)

(52) Cooperative Patent Classification (CPC):
**G06V 20/56; G06V 10/82; G06V 10/993;**
G06N 3/0464

(54) **METHOD FOR DETERMINING WHETHER CONTAMINATION EXISTS ON CAMERA LENS IN REAL-TIME AND COMPUTING DEVICE USING THE SAME**

VERFAHREN ZUR BESTIMMUNG DER ANWESENHEIT VON VERUNREINIGUNGEN AUF EINER KAMERALINSE IN ECHTZEIT UND COMPUTERVORRICHTUNG DAMIT

PROCÉDÉ PERMETTANT DE DÉTERMINER SI UNE CONTAMINATION EXISTE SUR UN OBJECTIF DE CAMÉRA EN TEMPS RÉEL ET DISPOSITIF INFORMATIQUE L'UTILISANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.09.2023 KR 20230122793**

(43) Date of publication of application:
**19.03.2025 Bulletin 2025/12**

(73) Proprietor: **Autonomous A2Z Co., Ltd.
Gyeongsan-si, Gyeongsangbuk-do 38428 (KR)**

(72) Inventors:
• **KIM, Dohyung
21074 Incheon (KR)**
• **CHOI, Song Woo
01820 Seoul (KR)**
• **SON, Jinwoo
16927 Yongin-si (KR)**

• **OH, Young Chul
13540 Seongnam-si (KR)**

(74) Representative: **AWA Sweden AB
Box 45086
104 30 Stockholm (SE)**

(56) References cited:
• **DAVID EIGEN ET AL: "Restoring an Image Taken through a Window Covered with Dirt or Rain", 2013 IEEE INTERNATIONAL CONFERENCE ON COMPUTER VISION, 1 December 2013 (2013-12-01), pages 633 - 640, XP055450390, ISBN: 978-1-4799-2840-8, DOI: 10.1109/ ICCV.2013.84**
• **HAMZEH YAZAN ET AL: "A Review of Detection and Removal of Raindrops in Automotive Vision Systems", JOURNAL OF IMAGING, vol. 7, no. 3, 10 March 2021 (2021-03-10), pages 52, XP093141650, ISSN: 2313-433X, DOI: 10.3390/ jimaging7030052**

EP 4 524 905 B1

**Description**

This present application claims the benefit of the earlier filing date of Korean patent application No. 10-2023-0122793, filed on September 14, 2023.

The present disclosure relates to a method for determining whether contamination exists on a camera lens in real-time and a computing device using the same.

Recently, in order to ensure a driver's safety and convenience, an autonomous driving system or Advance Driver Assistance System (ADAS) is being implemented. Therefore, sensors such as cameras, radars, and lidars are needed for the autonomous driving system or the ADAS to operate properly.

However, if contamination on a camera lens happens due to water droplets and dusts, etc., there is a problem of a quality of an image acquired by the camera lens to be extremely bad, to the point of jeopardizing a safety of the driver and pedestrians if used.

In regard to above, a prior art such as Korean Patent Application no. 10-2016-0048179 discloses a method to determine whether the contamination exists on the camera lens by comparing image visibility, sensitivity, etc., to a normal threshold value of a normal image.

However, according to the Korean Patent Application no. 10-2016-0048179, it is difficult to determine the normal threshold value. Also, there exists a problem of a decreased accuracy for some regions such as a sky, a ground, or a flat object, since the some regions has similar patterns to general contamination patterns.

According to another prior art such as Korean Patent Application no. 10-2021-0034734, it is determined whether the contamination exists on the camera lens by comparing an image taken prior to headlight exposure with an image taken after the headlight exposure. That is, if no differences are detected therebetween, the camera lens is determined to be contaminated.

However, according to the Korean Patent Application no. 10-2021-0034734, there exists a problem of a decreased accuracy in case images taken by the camera lens with translucent contamination can produce different results under different light sources.

According to still another prior art such as Japanese Patent Application no. 2008-060874, it is determined whether the contamination exists on the camera lens by comparing a measured pixel movement, which is calculated according to a vehicle move, with an estimated pixel movement, which is calculated by analyzing an optical flow.

However, according to the Japanese Patent Application no. 2008-060874, there exists a problem of only being able to determine contamination on specific areas where pixel movements could be measured. Also, the optical flow is difficult to analyze in environments where pixel differences are not large, such as the sky or a road surface.

According to still yet another prior art such as US Patent Registration no. 9319637, it is determined that the contamination exists on the camera lens in case a brightness change in pixels of frames acquired by continuous monitoring is not significant.

However, according to the US Patent Registration no. 9319637, there exists a problem of a decreased accuracy for environments with not much detectable difference, such as the sky or the road surface that are repeatedly observed.

According to still yet another prior art such as Korean Patent Application no. 10-2017-0140891, it is determined whether the contamination exists on the camera lens by using a CNN (Convolutional Neural Network) capable of extracting features from consecutive frames.

However, according to the Korean Patent Application no. 10-2017-0140891, since various distributions of shapes and locations of the contamination patterns are simplified into limited contamination states, there exists a problem of a decreased accuracy in local areas or specific areas such as the ground or the sky in case the CNN has not been trained with various contamination patterns.

Document XP055450390, "Restoring an Image Taken through a Window Covered with Dirt or Rain" by David Eigen et al., discloses a post-capture image processing solution that can remove localized rain and dirt artifacts from a single image. A dataset of clean/corrupted image pairs is collected and then used to train a specialized form of convolutional neural network.

In conclusion, there is currently no contamination detecting system that can (i) detect transparent and translucent contamination, (ii) detect contamination in case there are small pixel differences such as the sky, the ground, and the road, and (iii) produce an accurate contamination result from an inaccurate inferences of the CNN.

It is an object of the present disclosure to solve all the aforementioned problems.

It is another object of the present disclosure to determine whether contamination exists on a camera lens by using a CNN (Convolutional Neural Network) trained with various images containing various contamination patterns even if there are contamination patterns difficult to be classified such as translucent contamination.

It is still another object of the present disclosure to determine whether the contamination exists on the camera lens in real-time by using input images from at least one camera.

It is still yet another object of the present disclosure to determine whether the contamination exists on the camera lens in real-time for regions of monotonous patterns such as a sky or a ground by using a degree of frame visibility of the input images and an inference result of a neural network.

The invention is defined by the appended independent claims wherein claim 1 relates to a method for determining whether contamination exists on a camera lens in real-time, and claim 6 relates to a computing device for determining whether contamination exists on a camera lens in real-time. In the following, parts of the description and drawings referring to embodiments or examples which are not covered by the claims are not presented as embodiments of the invention, but as examples useful for understanding the invention.

In order to accomplish objects above, representative structures of the present disclosure are described as follows:

In accordance to one aspect of the present disclosure there is provided a method for determining whether contamination exists on a camera lens in real-time, including steps of: (a) in response to generating an input image by a camera, instructing, by a contamination detecting system, a contamination detection time determining unit to determine whether a credibility indicating a degree of suitability of the input image being used for detecting the contamination on the camera lens satisfies at least one preset condition; (b) in response to determining that the credibility of the input image satisfies the preset condition, (i) inputting, by the contamination detecting system, the input image into a contamination calculating unit, to thereby instruct the contamination calculating unit to (i-1) classify each of contamination states for each of sub-regions in the input image by applying one or more CNN (Convolutional Neural Network) operations to the input image, and thus (i-2) generate each degree of frame contamination for each of the sub-regions, and (ii) inputting, by the contamination detecting system, the input image into a visibility calculating unit, to thereby instruct the visibility calculating unit to (ii-1) generate each edge map for each of the sub-regions by referring to differences in brightness between each of pixels and its neighboring pixels among pixels of the input image, and thus (ii-2) generate each degree of frame visibility for each of the sub-regions; and (c) instructing, by the contamination detecting system, a contamination determining unit to determine whether the contamination exists on the camera lens by referring to the degree of frame contamination and the degree of frame visibility.

As one example, at the step of (a), in response to acquiring movement information, which includes at least one piece of information on a traveled distance and a rotated angle of the camera, from at least one external sensor, the contamination detecting system transmits the movement information to the contamination detection time determining unit, to thereby instruct the contamination detection time determining unit to determine whether the credibility satisfies said at least one preset condition by (i) determining whether the traveled distance is greater than a preset traveled distance, (ii) determining whether the rotated angle is greater than a preset rotated angle, (iii) determining whether a ratio of matched features generated by matching features extracted from the input image acquired from the camera are less than a preset matched feature ratio, and (iv) determining whether a feature disparity median generated by calculating a median of feature disparities of the input image is greater than a preset feature disparity median.

As one example, the contamination detecting system instructs the contamination detection time determining unit to (i) match each of previous features, extracted from a previous input image acquired before a current time point from the camera, with each of current features, extracted from a current input image acquired at the current time point from the camera, to thereby generate a ratio of matched previous-current features, and (ii) in response to determining that the ratio of the matched previous-current features is greater than or equal to the preset matched feature ratio, (ii-1) acquire each of previous-current feature disparity vectors by using each of positions and each of directions between said each of previous features and said each of current features, (ii-2) calculate the feature disparity median from a distribution of magnitudes of each of the previous-current feature disparity vectors and (ii-3) determine whether the feature disparity median is greater than the preset feature disparity median.

As one example, the contamination detecting system instructs the contamination detection time determining unit to (i) compare the traveled distance and the preset traveled distance by referring to the movement information acquired from the external sensor, and (i-1) in response to determining that the traveled distance is greater than the preset traveled distance, perform processes of said step (b), and (i-2) in response to determining that the traveled distance is smaller than or equal to the preset traveled distance, acquire the rotated angle from the external sensor, and (ii) compare the rotated angle and the preset rotated angle by referring to the movement information acquired from the external sensor, and (ii-1) in response to determining that the rotated angle is greater than the preset rotated angle, perform the processes of said step (b), and (ii-2) in response to determining that the rotated angle is smaller than or equal to the preset rotated angle, acquire the previous features and the current features, and (iii) compare the ratio of the matched previous-current features with the preset matched feature ratio, and (iii-1) in response to determining that the ratio of the matched previous-current features is smaller than the preset matched feature ratio, perform the processes of said step (b) and (iii-2) in response to determining that the ratio of the matched previous-current features is greater than or equal to the preset matched feature ratio, acquire each of the previous-current feature disparity vectors, and (iv) compare the feature disparity median with the preset feature disparity median, and (iv-1) in response to determining that the feature disparity median is greater than the preset feature disparity median, perform the processes of said step (b), and (iv-2) in response to determining that the feature disparity median is smaller than or equal to the preset feature disparity median, terminate a process for determining whether the contamination exists on the camera lens.

As one example, at the step of (b), on condition that predetermined n contamination states including at least a transparent state, a translucent state, and an opaque state are set, the contamination detecting system instructs the contamination calculating unit to (i) apply the CNN operations to the input image, to thereby generate each output value for each of the sub-regions and thus generate a contamination probability map representing each contamination state for each of the sub-regions by using said each output value, and (ii) apply each preset weight vector to the contamination probability map, to thereby generate said each degree of frame contamination for each of the sub-regions.

As one example, as the contamination state gets closer to the opaque state, among the n predetermined contamination states, a weight of said each preset weight vector is increased, and wherein, as the contamination state gets closer to the transparent state, among the n predetermined contamination states, within a predetermined state threshold, on condition that the weight of said each preset weight vector is set to be a negative value, the contamination detecting system instructs the contamination calculating unit to determine said each degree of frame contamination for each of the sub-regions by applying said each preset weight vector to the contamination probability map.

As one example, at the step of (b), the contamination detecting system instructs the visibility calculating unit to apply said each edge map and an attenuation constant to each degree of previous frame visibility generated from each of previous sub-regions of a previous input image, to thereby generate said each degree of frame visibility for each of the sub-regions of the input image, wherein the attenuation constant is a constant to control a change in the degree of frame visibility reflected by applying the degree of previous frame visibility.

As one example, at the step of (c), the contamination detecting system instructs the contamination determining unit to (i) acquire each degree of current contamination calculated for each of the sub-regions by combining said each degree of frame contamination and said each degree of frame visibility for each of the sub-regions, (ii) calculate each degree of calibrated contamination for each of the sub-regions by referring to each degree of previous contamination generated from the previous input image and said each degree of current contamination, (iii) determine whether said each degree of calibrated contamination is greater than or equal to a preset calibration degree for each of the sub-regions, and (iv) in response to a cardinal number of first specific sub-regions being greater than a predetermined number, determine that the contamination exists on the camera lens, wherein the first specific sub-regions are each of the sub-regions with the degree of calibrated contamination that is greater than or equal to the preset calibration degree.

As one example, on condition that each degree of calculated regional importance for each of the sub-regions is set by referring to at least part of each degree of positional importance, each degree of object class importance, and each traveled direction of the object for each of the sub-regions, in response to a sum of said each degree of calculated regional importance for each of second specific sub-regions being greater than or equal to a predetermined contamination region importance, the contamination detecting system instructs the contamination determining unit to determine that the contamination exists on the camera lens, wherein the second specific sub-regions are each of the sub-regions with the degree of calibrated contamination that is greater than or equal to the preset calibration degree.

As one example, the contamination detecting system (i) instructs the visibility calculating unit to (i-1) output a preset degree of first frame visibility in response to a degree of specific frame visibility being greater than the preset degree of first frame visibility, (i-2) output a preset degree of second frame visibility in response to the degree of specific frame visibility being smaller than the preset degree of second frame visibility, and (i-3) output the degree of specific frame visibility in response to the degree of specific frame visibility being in between the preset degree of first frame visibility and the preset degree of second frame visibility, and (ii) instructs the contamination determining unit to (ii-1) output a preset degree of first calibrated contamination in response to a degree of specific calibrated contamination being greater than the preset degree of first calibrated contamination, (ii-2) output a preset degree of second calibrated contamination in response to the degree of specific calibrated contamination being smaller than the preset degree of second calibrated contamination, and (ii-3) output the degree of specific calibrated contamination in response to the degree of specific calibrated contamination being in between the preset degree of first calibrated contamination and the preset degree of second calibrated contamination, wherein the preset degree of second frame visibility is smaller than the preset degree of first frame visibility, and wherein the preset degree of second calibrated contamination is smaller than the preset degree of first calibrated contamination.

In accordance to another aspect of the present disclosure there is provided a computing device for determining whether contamination exists on a camera lens in real-time, including: at least one memory that stores instructions; at least one processor configured to execute the instructions to perform processes of: (I) in response to generating an input image by a camera, instructing a contamination detection time determining unit to determine whether a credibility indicating a degree of suitability of the input image being used for detecting the contamination on the camera lens satisfies at least one preset condition; (II) in response to determining that the credibility of the input image satisfies the preset condition, (i) inputting the input image into a contamination calculating unit, to thereby instruct the contamination calculating unit to (i-1) classify each of contamination states for each of sub-regions in the input image by applying one or more CNN (Convolutional Neural Network) operations to the input image, and thus (i-2) generate each degree of frame contamination for each of the sub-regions, and (ii) inputting the input image into a visibility calculating unit, to thereby instruct the visibility calculating unit to (ii-1) generate each edge map for each of the sub-regions by referring to differences in brightness between each of pixels and its neighboring pixels among pixels of the input image, and thus (ii-2) generate each degree of frame visibility for each of the sub-regions; and (III) instructing a contamination determining unit to determine whether the contamination exists on the camera lens by referring to the degree of frame contamination and the degree of frame visibility.

As one example, at the process of (I), in response to acquiring movement information, which includes at least one piece of information on a traveled distance and a rotated angle of the camera, from at least one external sensor, the processor transmits the movement information to the contamination detection time determining unit, to thereby instruct the contamination detection time determining unit to determine whether the credibility satisfies said at least one preset condition by (i) determining whether the traveled distance is greater than a preset traveled distance, (ii) determining whether the rotated angle is greater than a preset rotated angle, (iii) determining whether a ratio of matched features generated by matching features extracted from the input image acquired from the camera are less than a preset matched feature ratio, and (iv) determining whether a feature disparity median generated by calculating a median of feature disparities of the input image is greater than a preset feature disparity median.

As one example, the processor instructs the contamination detection time determining unit to (i) match each of previous features, extracted from a previous input image acquired before a current time point from the camera, with each of current features, extracted from a current input image acquired at the current time point from the camera, to thereby generate a ratio of matched previous-current features, and (ii) in response to determining that the ratio of the matched previous-current features is greater than or equal to the preset matched feature ratio, (ii-1) acquire each of previous-current feature disparity vectors by using each of positions and each of directions between said each of previous features and said each of current features, (ii-2) calculate the feature disparity median from a distribution of magnitudes of each of the previous-current feature disparity vectors and (ii-3) determine whether the feature disparity median is greater than the preset feature disparity median.

As one example, the processor instructs the contamination detection time determining unit to (i) compare the traveled distance and the preset traveled distance by referring to the movement information acquired from the external sensor, and (i-1) in response to determining that the traveled distance is greater than the preset traveled distance, perform processes of said step (b), and (i-2) in response to determining that the traveled distance is smaller than or equal to the preset traveled distance, acquire the rotated angle from the external sensor, and (ii) compare the rotated angle and the preset rotated angle by referring to the movement information acquired from the external sensor, and (ii-1) in response to determining that the rotated angle is greater than the preset rotated angle, perform the processes of said step (b), and (ii-2) in response to determining that the rotated angle is smaller than or equal to the preset rotated angle, acquire the previous features and the current features, and (iii) compare the ratio of the matched previous-current features with the preset matched feature ratio, and (iii-1) in response to determining that the ratio of the matched previous-current features is smaller than the preset matched feature ratio, perform the processes of said step (b) and (iii-2) in response to determining that the ratio of the matched previous-current features is greater than or equal to the preset matched feature ratio, acquire each of the previous-current feature disparity vectors, and (iv) compare the feature disparity median with the preset feature disparity median, and (iv-1) in response to determining that the feature disparity median is greater than the preset feature disparity median, perform the processes of said step (b), and (iv-2) in response to determining that the feature disparity median is smaller than or equal to the preset feature disparity median, terminate a process for determining whether the contamination exists on the camera lens.

As one example, at the process of (II), on condition that predetermined n contamination states including at least a transparent state, a translucent state, and an opaque state are set, the processor instructs the contamination calculating unit to (i) apply the CNN operations to the input image, to thereby generate each output value for each of the sub-regions and thus generate a contamination probability map representing each contamination state for each of the sub-regions by using said each output value, and (ii) apply each preset weight vector to the contamination probability map, to thereby generate said each degree of frame contamination for each of the sub-regions.

As one example, as the contamination state gets closer to the opaque state, among the n predetermined contamination states, a weight of said each preset weight vector is increased, and wherein, as the contamination state gets closer to the transparent state, among the n predetermined contamination states, within a predetermined state threshold, on condition that the weight of said each preset weight vector is set to be a negative value, the processor instructs the contamination calculating unit to determine said each degree of frame contamination for each of the sub-regions by applying said each preset weight vector to the contamination probability map.

As one example, at the process of (II), the processor instructs the visibility calculating unit to apply said each edge map and an attenuation constant to each degree of previous frame visibility generated from each of previous sub-regions of a previous input image, to thereby generate said each degree of frame visibility for each of the sub-regions of the input image, wherein the attenuation constant is a constant to control a change in the degree of frame visibility reflected by applying the degree of previous frame visibility.

As one example, at the process of (III), the processor instructs the contamination determining unit to (i) acquire each degree of current contamination calculated for each of the sub-regions by combining said each degree of frame contamination and said each degree of frame visibility for each of the sub-regions, (ii) calculate each degree of calibrated contamination for each of the sub-regions by referring to each degree of previous contamination generated from the previous input image and said each degree of current contamination, (iii) determine whether said each degree of calibrated contamination is greater than or equal to a preset calibration degree for each of the sub-regions, and (iv) in response to a cardinal number of first specific sub-regions being greater than a predetermined number, determine that the contamination exists on the camera lens, wherein the first specific sub-regions are each of the sub-regions with the degree of calibrated contamination that is greater than or equal to the preset calibration degree.

As one example, on condition that each degree of calculated regional importance for each of the sub-regions is set by referring to at least part of each degree of positional importance, each degree of object class importance, and each traveled direction of the object for each of the sub-regions, in response to a sum of said each degree of calculated regional importance for each of second specific sub-regions being greater than or equal to a predetermined contamination region importance, the processor instructs the contamination determining unit to determine that the contamination exists on the camera lens, wherein the second specific sub-regions are each of the sub-regions with the degree of calibrated contamination that is greater than or equal to the preset calibration degree.

As one example, the processor (i) instructs the visibility calculating unit to (i-1) output a preset degree of first frame visibility in response to a degree of specific frame visibility being greater than the preset degree of first frame visibility, (i-2) output a preset degree of second frame visibility in response to the degree of specific frame visibility being smaller than the preset degree of second frame visibility, and (i-3) output the degree of specific frame visibility in response to the degree of specific frame visibility being in between the preset degree of first frame visibility and the preset degree of second frame visibility, and (ii) instructs the contamination determining unit to (ii-1) output a preset degree of first calibrated contamination in response to a degree of specific calibrated contamination being greater than the preset degree of first calibrated contamination, (ii-2) output a preset degree of second calibrated contamination in response to the degree of specific calibrated contamination being smaller than the preset degree of second calibrated contamination, and (ii-3) output the degree of specific calibrated contamination in response to the degree of specific calibrated contamination being in between the preset degree of first calibrated contamination and the preset degree of second calibrated contamination, wherein the preset degree of second frame visibility is smaller than the preset degree of first frame visibility, and wherein the preset degree of second calibrated contamination is smaller than the preset degree of first calibrated contamination.

In addition, recordable media that are readable by a computer for storing a computer program to execute the method of the present disclosure is further provided.

The following drawings to be used for explaining example embodiments of the present disclosure are only part of example embodiments of the present disclosure and other drawings can be acquired based on the drawings by those skilled in the art of the present disclosure without inventive work.

Fig. 1 is a drawing schematically illustrating a contamination detecting system for determining whether contamination exists on a camera lens in real-time in accordance with one example embodiment of the present disclosure.
Fig. 2 is a flow chart schematically illustrating processes of determining whether the contamination exists on the camera lens in real-time in accordance with one example embodiment of the present disclosure.
Fig. 3 is a flow chart schematically illustrating processes for determining a contamination detection time in accordance with one example embodiment of the present disclosure.
Fig. 4 is a drawing schematically illustrating one or more feature disparity vectors from an input image in accordance with one example embodiment of the present disclosure.
Fig. 5 is a drawing schematically illustrating a process of acquiring a degree of frame visibility from the input image in accordance with one example embodiment of the present disclosure.
Fig. 6 is a drawing schematically illustrating a process of generating a degree of contamination by referring to the degree of frame visibility and a degree of frame contamination of the input image in accordance with one example embodiment of the present disclosure.

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention.

In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

To allow those skilled in the art to carry out the present invention easily, the example embodiments of the present invention by referring to attached diagrams will be explained in detail as shown below.

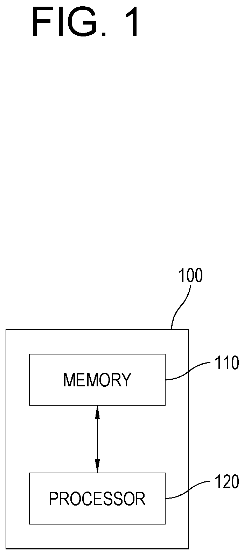

Fig. 1 is a drawing schematically illustrating a contamination detecting system for determining whether contamination exists on a camera lens in real-time in accordance with one example embodiment of the present disclosure.

Referring to Fig. 1, the contamination detecting system 100 may include a memory 110 to store instructions for determining whether the contamination exists on the camera lens and a processor 120 for performing the instructions stored in the memory 110 in accordance with one example embodiment of the present disclosure. Herein, the contamination detecting system 100 may include at least one of a server, a PC (Personal Computer), a tablet, a mobile computer, a PDA/EDA, a phone, a smart phone, an IOT device, etc.

Specifically, the contamination detecting system 100 may typically achieve a desired system performance by using combinations of at least one computing device and at least one computer software, e.g., a computer processor, a memory, a storage, an input device, an output device, or any other conventional computing components, an electronic communication device such as a router or a switch, an electronic information storage system such as a network-attached storage (NAS) device and a storage area network (SAN) as the computing device and any instructions that allow the computing device to function in a specific way as the computer software.

Also, the processors of such devices may include hardware configuration of MPU (Micro Processing Unit) or CPU (Central Processing Unit), cache memory, data bus, etc. Additionally, the computing device may further include operating system (OS) and software configuration of applications that achieve specific purposes.

Such description of the computing device does not exclude an integrated device including any combination of a processor, a memory, a medium, or any other computing components for implementing the present disclosure.

Meanwhile, the contamination detecting system 100 may be configured by a plurality of units.

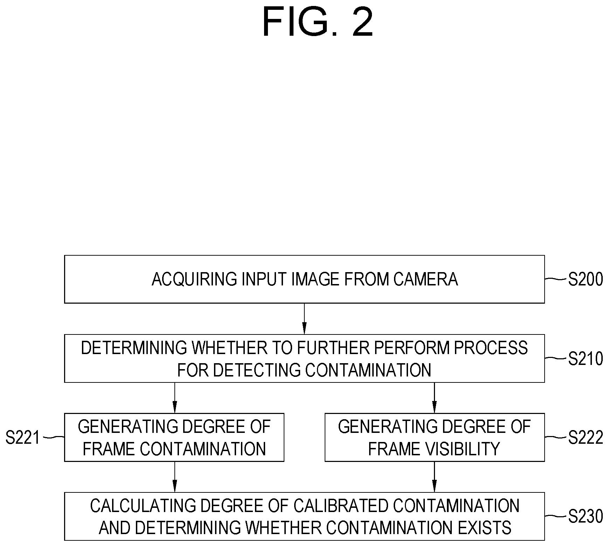

Fig. 2 is a flow chart schematically illustrating processes of determining whether the contamination exists on the camera lens in real-time in accordance with one example embodiment of the present disclosure.

Referring to Fig. 2, in response to generating an input image by a camera, the contamination detecting system 100 may acquire the input image from the camera, at a step of S200, and may instruct a contamination detection time determining unit to determine whether a process for determining whether the contamination exists on the camera lens should be performed by referring to a credibility indicating a degree of suitability of the input image to be used for detecting the contamination on the camera lens, at a step of S210. Herein, the credibility can be calculated by determining to what degree the input image is suitable for detecting the contamination on the camera lens. That is, the credibility can be acquired by checking whether the input image satisfies at least one preset condition, which is explained below. It is to be appreciated that the contamination detection time determining unit may be included in the contamination detecting system 100, but it is not limited thereto.

In response to determining that the credibility satisfies said at least one preset condition, the contamination detecting system 100 may input the input image to a contamination calculating unit and a visibility calculating unit. Herein, the contamination calculating unit and the visibility calculating unit may be included in the contamination detecting system 100, but they are not limited thereto.

The contamination detecting system 100 may instruct the contamination calculating unit to classify each of contamination states for each of sub-regions in the input image by applying one or more CNN (Convolutional Neural Network) operations to the input image, and thus generate each degree of frame contamination for each of the sub-regions, at a step of S221. Further, independently of S221, the contamination detecting system 100 may instruct the visibility calculating unit to generate each edge map for each of the sub-regions by referring to differences in brightness between each of pixels and its neighboring pixels among pixels of the input image, and thus generate each degree of frame visibility for each of the sub-regions, at a step of S222.

Afterwards, the contamination detecting system 100 may instruct a contamination determining unit to determine whether the contamination exists on the camera lens by referring to said each degree of frame contamination and said each degree of frame visibility, at a step of S230. Herein, the contamination determining unit may be included in the contamination detecting system 100, but it is not limited thereto.

Below, details of the contamination detection time determining unit will be explained.

First, the contamination detecting system 100 may transmit the input image acquired from the camera and movement information to the contamination detection time determining unit. Herein, the movement information may include at least one piece of information on a traveled distance and a rotated angle of the camera acquired from at least one external sensor. Further, the contamination detection time determining unit may determine whether the credibility satisfies said at least one preset condition by (i) determining whether the traveled distance is greater than a preset traveled distance, (ii) determining whether the rotated angle is greater than a preset rotated angle, (iii) determining whether a ratio of matched features generated by matching features extracted from the input image acquired from the camera are less than a preset matched feature ratio, and (iv) determining whether a feature disparity median generated by calculating a median of feature disparities of the input image is greater than a preset feature disparity median. The input image may be determined to be suitable for detecting whether the contamination exists on the camera lens if said at least one preset condition of above is satisfied.

If the camera is moved or rotated sufficiently, it can be determined as having sufficient information to be used for determining whether the contamination exists on the camera lens because the camera may hold information about objects with different physical positions. Also, even if the camera is not moved or rotated sufficiently, in case a surrounding environment has sudden changes or in case new information related to positional changes in one or more objects is included, it can be determined that sufficient information to be used for determining whether the contamination exists on the camera lens is acquired. Therefore, the input image can be determined to be suitable if it satisfies the preset condition (that is, if a value related to a representation of the input image is greater than or equal to a certain threshold).

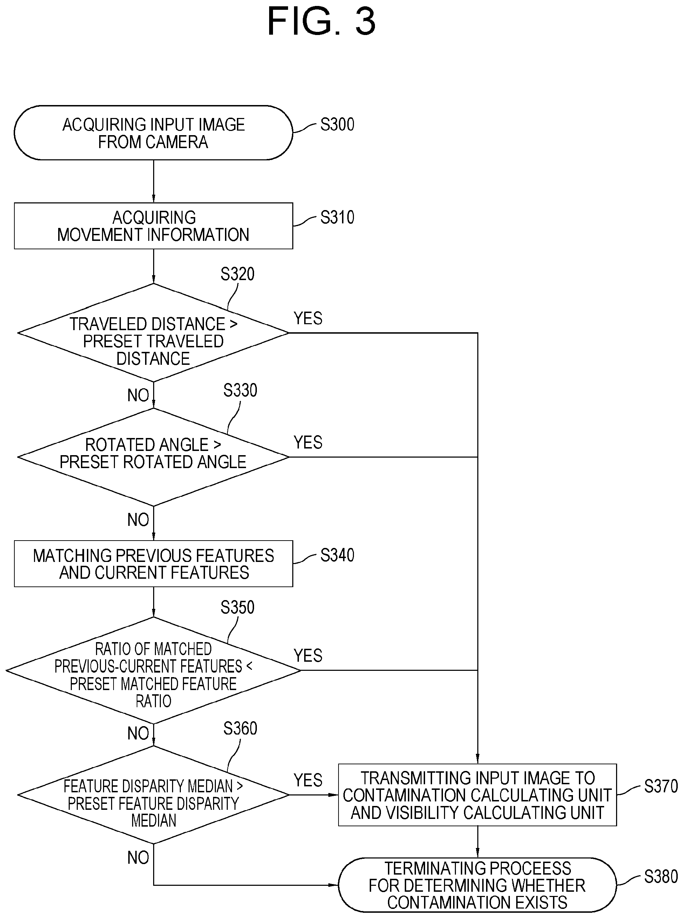

Below, by referring to Fig. 3, details of determining whether the credibility satisfies the preset conditions are explained.

Fig. 3 is a flow chart schematically illustrating processes for determining the contamination detection time in accordance with one example embodiment of the present disclosure.

Referring to Fig. 3, the contamination detecting system 100 may acquire the input image from the camera, at a step of 300, and acquire the movement information from the external sensor, at a step of 310. Then, the contamination detecting system 100 may transmit them to the contamination detection time determining unit. The contamination detection time determining unit may compare the traveled distance and the preset traveled distance, at a step of 320. Herein, the traveled distance may be a distance traveled by a vehicle with the camera mounted thereon, but it is not limited thereto. In response to determining that the traveled distance is greater than the preset traveled distance, the process for determining whether the contamination exists on the camera lens is further performed, at a step of 370, and in response to determining that the traveled distance is smaller than or equal to the preset traveled distance (that is, if the preset condition of the credibility is not yet satisfied), the rotated angle of the movement information may be acquired. The rotated angle may be an angle rotated by the vehicle with the camera mounted thereon, however it is not limited thereto. Afterwards, the contamination detection time determining unit may compare the rotated angle and the preset rotated angle, at a step of 330. In response to determining that the rotated angle is greater than the preset rotated angle, the process for determining whether the contamination exists on the camera lens is further performed, at the step of 370, and in response to determining that the rotated angle is smaller than or equal to the preset rotated angle, previous features and current features may be acquired to determine a matching degree therebetween, at a step of 340. The contamination detection time determining unit may compare a ratio of the matched previous-current features with the preset matched feature ratio, at a step of 350. In response to determining that the ratio of the matched previous-current features is smaller than the preset matched feature ratio, the process for determining whether the contamination exists on the camera lens is further performed, at the step of 370, and in response to determining that the ratio of the matched previous-current features is greater than or equal to the preset matched feature ratio, each of previous-current feature disparity vectors may be acquired to calculate the feature disparity median. Afterwards, the contamination detection time determining unit may compare the feature disparity median with the preset feature disparity median, at a step of 360. In response to determining that the feature disparity median is greater than the preset feature disparity median, the process for determining whether the contamination exists on the camera lens is further performed, at the step of 370, and in response to determining that the feature disparity median is smaller than or equal to the preset feature disparity median, the process for determining whether the contamination exists on the camera lens is terminated, at a step of 380.

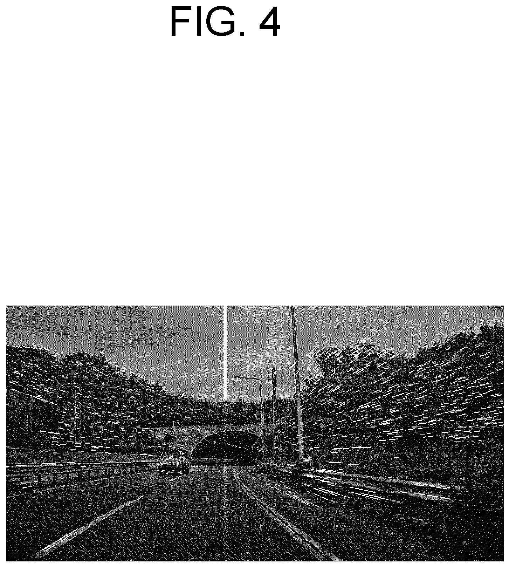

Details of calculating the feature disparity median by acquiring the previous-current feature disparity vectors are explained with reference to Fig. 4.

Fig. 4 is a drawing schematically illustrating one or more feature disparity vectors from the input image in accordance with one example embodiment of the present disclosure.

As mentioned before, the contamination detection time determining unit may generate the ratio of the matched previous-current features by matching each of previous features with each of current features, and compare the ratio of the matched previous-current features with the preset matched feature ratio. Herein, the ratio of the matched previous-current features are generated by matching each of the previous features, extracted from a previous input image acquired before a current time point from the camera, with each of the current features, extracted from a current input image acquired at the current time point from the camera. And, in response to determining that the ratio of the matched previous-current features is greater than or equal to the preset matched feature ratio, each of the previous-current feature disparity vectors may be acquired by using each of positions and each of directions between said each of the previous features and said each of the current features.

Fig. 4 illustrates the previous-current feature disparity vectors acquired by matching the current features obtained from the current input image at the current time point t and the previous features obtained from the previous input image at the previous time point t-dt. Due to the perspective effect, sizes of disparities may be distributed in a wide range, therefore, a median value may be used as a representative value to detect any changes in images. That is, the feature disparity median is calculated from the plurality of the previous-current feature disparity vectors. Herein, the feature disparity median may be calculated from a distribution of magnitudes of each of the previous-current feature disparity vectors. Then, the feature disparity median is compared with the preset feature disparity median.

Referring back to Fig. 2, on condition that the credibility of the input image is satisfied, the visibility calculating unit may calculate said each of the degree of frame visibility, at a step of S222. In principle, for images taken from a contamination-free camera lens, brightness may differ greatly between neighboring pixels. Thus, the degree of frame visibility can be calculated by using the principle above. Therefore, the visibility calculating unit may generate the edge map with strong components indicating large changes in the input image by referring to the differences in brightness between each of pixels and its neighboring pixels. Thereafter, said each degree of frame visibility for each of the sub-regions may be generated based on the edge map. Herein, said each degree of frame visibility may be calculated by using an average value, a representative value, or a median value of edge components in the edge map for each of the sub-regions. It is appreciated that the sub-regions may be regions divided by a predetermined grid, but the present disclosure is not limited thereto.

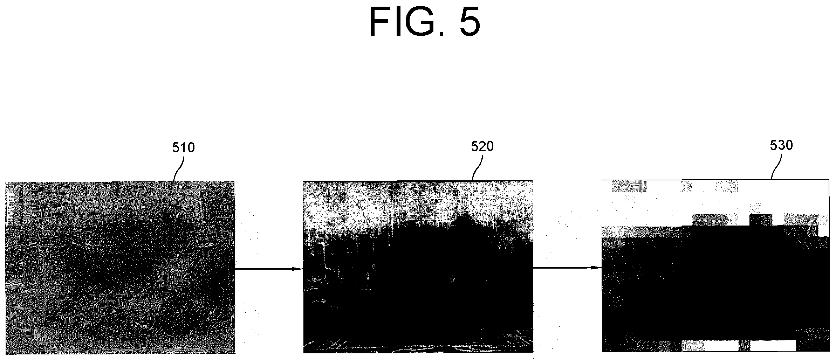

Details of calculating said each degree of frame visibility is explained with reference to Fig. 5.

Fig. 5 is a drawing schematically illustrating a process for acquiring said each degree of frame visibility from the input image in accordance with one example embodiment of the present disclosure.

Referring to Fig. 5, the edges 520 may be extracted from the input image 510, and said each edge map 530 may be generated by referring to the edges 520. Herein, by referring to the edges 520, it can be noted that unlike contamination-free regions contaminated regions do not contain a lot of the edges due to slight differences in brightness in the contaminated regions . That is, very few edges can be extracted for the contaminated regions due to small differences in brightness between each of the pixels and its neighboring pixels. After generating the edge map 530 by using the edges 520, said each degree of frame visibility can be calculated for each of sub-regions by referring to the edge map 530.

Referring back to Fig. 2, regarding the step of S222, in order to calculate said each degree of frame visibility from said each edge map, the contamination detecting system 100 may instruct the visibility calculating unit to reflect each degree of previous frame visibility generated from each of previous sub-regions of a previous input image. Further, an attenuation constant may be applied to control a change in said each degree of frame visibility reflected by applying the degree of previous frame visibility. Additional details thereof will be explained hereinafter.

Furthermore, the contamination detecting system 100 may instruct the visibility calculating unit to (i-1) output a preset degree of first frame visibility in response to a degree of specific frame visibility being greater than the preset degree of first frame visibility, (i-2) output a preset degree of second frame visibility in response to the degree of specific frame visibility being smaller than the preset degree of second frame visibility, and (i-3) output the degree of specific frame visibility in response to the degree of specific frame visibility being in between the preset degree of first frame visibility and the preset degree of second frame visibility. Herein, the preset degree of second frame visibility may be smaller than the preset degree of first frame visibility.

That is, an equation for calculating said each of degree of frame visibility is as below.

$$C_t(\mathrm{x}, \mathrm{y}) = f_{clamp}\left(C_{t-\Delta t}(\mathrm{x}, \mathrm{y}) + \mathrm{E}(\mathrm{x}, \mathrm{y}) - \alpha\right)$$

*where*

$$f_{clamp}(C) = \begin{cases} C_{f1}, & C > C_{f1} \\ C_{f2}, & C < C_{f2} \\ C, & otherwise \end{cases}$$

The degree of frame visibility $C_t(x, y)$ for the sub-region with (x, y) coordinates may be acquired by subtracting the attenuation constant $\alpha$ from a summation of the degree of previous frame visibility $C_{t-\Delta t}(x, y)$ and the edge map E(x, y) acquired from the current input image. Herein, if said $C$ is greater than the preset degree of first frame visibility $C_{f1}$, $C_{f1}$ is outputted, and if said $C$ is smaller than the preset degree of second frame visibility $C_{f2}$, $C_{f2}$ is outputted. Otherwise, $C$ itself is outputted. Herein, $C_{f1}$ may be 1 and $C_{f2}$ may be 0, but they are not limited thereto.

Referring back to Fig. 2, the step of S221 for generating the degree of frame contamination can be seen. In detail, the contamination detecting system 100 may set predetermined n contamination states including at least a transparent state, a translucent state, and an opaque state. Further, the contamination detecting system 100 may instruct the contamination calculating unit to apply the CNN operations to the input image, to thereby generate each output value for each of the sub-regions and thus generate a contamination probability map representing each contamination state for each of the sub-regions by using said each output value.

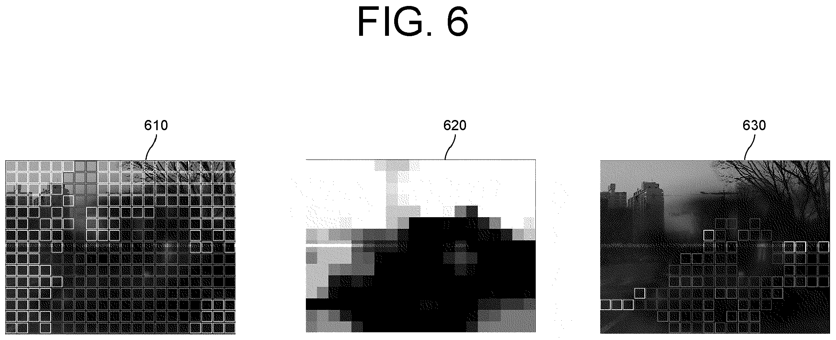

Details of generating the contamination probability map may be referred to in Fig. 6.

Fig. 6 is a drawing schematically illustrating a process of generating a degree of contamination by referring to the degree of frame visibility and the degree of frame contamination of the input image in accordance with one example embodiment of the present disclosure.

By referring to Fig. 6, on condition that the contamination probability map is generated by applying the CNN operations to classify each of the sub-regions into 4 contamination states, the contamination probability map 610 visualizing each inferred contamination state for each of the sub-regions can be seen. In the contamination probability map 610, each one of the 4 contamination states for each of the sub-regions is visualized. For example, each of the sub-regions may be represented as an orange color for the opaque state, a yellow color for a first translucent state near the opaque state, a grey color for a second translucent state near the transparent state, and a white color for transparent state.

By referring back to Fig. 2, on condition that the contamination probability map is generated, each preset weight vector corresponding to each contamination state may be applied to the contamination probability map, to thereby generate said each degree of frame contamination for each of the sub-regions.

Herein, as the contamination state gets closer to the opaque state, among the n predetermined contamination states, a weight of the preset weight vector may be increased. Additionally, as the contamination state gets closer to the transparent state within a predetermined state threshold, among the n predetermined contamination states, the weight of the preset weight vector may be set to be a negative value. That is, the contamination detecting system 100 may instruct the contamination calculating unit to determine said each degree of frame contamination for each of the sub-regions by applying said each preset weight vector to the contamination probability map.

On condition that said each degree of frame contamination and said each degree of frame visibility are acquired respectively from the contamination calculating unit and the visibility calculating unit, the contamination detecting system 100 may transmit said each degree of frame contamination and said each degree of frame visibility to the contamination determining unit, to thereby instruct the contamination determining unit to calculate each degree of current contamination for each of the sub-regions by using said each degree of frame contamination and said each degree of frame visibility for each of the sub-regions.

Herein, the contamination detecting system 100 may instruct the contamination determining unit to reflect each degree of previous contamination on each degree of current contamination, to thereby calculate each degree of calibrated contamination for each of the sub-regions. For reference, said each degree of previous contamination was generated for each of sub-regions of the previous input image.

Moreover, the contamination detecting system 100 may instruct the contamination determining unit to (i-1) output a preset degree of first calibrated contamination in response to a degree of specific calibrated contamination being greater than the preset degree of first calibrated contamination, (i-2) output a preset degree of second calibrated contamination in response to the degree of specific calibrated contamination being smaller than the preset degree of second calibrated contamination, and (i-3) output the degree of specific calibrated contamination itself in response to the degree of specific calibrated contamination being in between the preset degree of first calibrated contamination and the preset degree of second calibrated contamination. Herein, the preset degree of second calibrated contamination may be smaller than the preset degree of first calibrated contamination.

That is, an equation for calculating said each of degree of calibrated contamination is as below.

$$S_t(\text{x}, \text{y}) = f_{clamp}(S_{t-\Delta t}(\text{x}, \text{y}) + S_f(\text{x}, \text{y}) - C_t(\text{x}, \text{y}))$$

$$f_{clamp}(S) = \begin{cases} S_{t1}, & S > S_{t1} \\ S_{t2}, & S < S_{t2} \\ S, & otherwise \end{cases}$$

The degree of calibrated contamination $S_t(x, y)$ for the sub-region with (x,y) coordinates may be acquired by subtracting the degree of frame visibility $C_t(x, y)$ from a summation of the degree of previous contamination $S_{t-\Delta t}(x, y)$ and the degree of frame contamination $S_f(x, y)$. Herein, the degree of frame visibility $C_t(x, y)$ is subtracted because the degree of calibrated contamination $S_t(x, y)$ increases as the input image is closer to being contamination-free. Herein, if said each degree of calibrated contamination $S$ is greater than the preset degree of first calibrated contamination $S_{t1}$, $S_{t1}$ is outputted, and if said each degree of calibrated contamination $S$ is smaller than the preset degree of second calibrated contamination $S_{t2}$, $S_{t2}$ is outputted. Otherwise, $S$ itself is outputted. Herein, $S_{t1}$ may be 1 and $S_{t2}$ may be 0, but they are not limited thereto.

The contamination detecting system 100 may instruct the contamination determining unit to determine whether said each degree of calibrated contamination is greater than or equal to a preset calibration degree for each of the sub-regions, and in response to a cardinal number of first specific sub-regions being greater than a predetermined number, determine that the contamination exists on the camera lens. Herein the first specific sub-regions are some parts of the sub-regions with the degree of calibrated contamination that is greater than or equal to the preset calibration degree.

Furthermore, each degree of calculated regional importance for each of the sub-regions may be set by referring to at least part of each degree of positional importance, each degree of object class importance, and each traveled direction of the object for each of the sub-regions. For example, said each degree of positional importance may increase as a sub-region is closer to a center region of the input image, and said each degree of object class importance may be set for humans, vehicles, guardrail, etc., and said each traveled direction of the object may be set by using traveled distances of the humans, the vehicles, etc. It is appreciated that other references related to a driving environment (e.g., driving habits, traffic laws, surrounding environment) may be used to generate the degree of calculated regional importance. Moreover, in response to a sum of said each degree of calculated regional importance for each of second specific sub-regions being greater than or equal to a predetermined contamination region importance, the contamination detecting system instructs the contamination determining unit to determine that the contamination exists on the camera lens. Herein the second specific sub-regions are some parts of the sub-regions with the degree of calibrated contamination that is greater than or equal to the preset calibration degree. Further, the second specific sub-regions may be same as or different from the first specific sub-regions.

Referring back to Fig. 6, the contamination detecting system 100 may (i) instruct the contamination calculating unit to generate said each degree of frame contamination for each of the sub-regions by referring to the contamination probability map 610, and (ii) instruct the visibility calculating unit to generate sad each degree of frame visibility for each of the sub-regions by referring to the edge map 620. Then, the contamination detecting system 100 may instruct the contamination determining unit to generate said each degree of calibrated contamination by referring to said each degree of frame contamination and said each degree of frame visibility. Fig. 6 illustrates said each degree of calibrated contamination 630 for each of the sub-sections.

The present disclosure has an effect of determining whether the contamination exists on the camera lens by using the CNN (Convolutional Neural Network) trained with various images containing various contamination patterns even if there are contamination patterns difficult to be classified such as translucent contamination.

The present disclosure has another effect of determining whether the contamination exists on the camera lens in real-time by using input images from at least one camera.

The present disclosure still has still another effect of determining whether the contamination exists on the camera lens in real-time for regions of monotonous patterns such as the sky or the ground by using the degree of frame visibility of the input images and an inference result of a neural network.

The embodiments of the present disclosure as explained above can be implemented in a form of executable program command through a variety of computer means recordable in computer readable media. The computer readable media may include solely or in combination, program commands, data files, and data structures. The program commands recorded to the media may be components specially designed for the present disclosure or may be usable to a skilled human in a field of computer software. Computer readable media include magnetic media such as hard disk, floppy disk, and magnetic tape, optical media such as CD-ROM and DVD, magneto-optical media such as floptical disk and hardware devices such as ROM, RAM, and flash memory specially designed to store and carry out program commands. Program commands may include not only a machine language code made by a complier but also a high-level code that can be used by an interpreter etc., which is executed by a computer. The aforementioned hardware device can work as more than a software module to perform the action of the present disclosure and they can do the same in the opposite case.

As seen above, the present disclosure has been explained by specific matters such as detailed components, limited embodiments, and drawings. They have been provided only to help more general understanding of the present disclosure. It, however, will be understood by those skilled in the art that various changes and modification may be made from the description without departing from the scope of the disclosure as defined in the following claims.

Accordingly, the thought of the present disclosure must not be confined to the explained embodiments, and the following patent claims as well as everything including variations equal to the patent claims pertain to the category of the thought of the present disclosure.

## Claims

1.    A method for determining whether contamination exists on a camera lens in real-time, comprising steps of:

(a) in response to generating an input image by a camera, instructing, by a contamination detecting system, a contamination detection time determining unit to determine whether a credibility indicating a degree of suitability of the input image being used for detecting the contamination on the camera lens satisfies at least one preset condition, wherein in response to acquiring movement information, which includes at least one piece of information on a traveled distance and a rotated angle of the camera, from at least one external sensor, the contamination detecting system transmits the movement information to the contamination detection time determining unit, to thereby instruct the contamination detection time determining unit to determine whether the credibility satisfies said at least one preset condition by (i) determining whether the traveled distance is greater than a preset traveled distance, (ii) determining whether the rotated angle is greater than a preset rotated angle, (iii) determining whether a ratio of matched features generated by matching features extracted from the input image acquired from the camera are less than a preset matched feature ratio, and (iv) determining whether a feature disparity median generated by calculating a median of feature disparities of the input image is greater than a preset feature disparity median;

(b) in response to determining that the credibility of the input image satisfies the preset condition, (i) inputting, by the contamination detecting system, the input image into a contamination calculating unit, to thereby instruct the contamination calculating unit to (i-1) classify each of contamination states for each of sub-regions in the input image by applying one or more CNN (Convolutional Neural Network) operations to the input image, and thus (i-2) generate each degree of frame contamination for each of the sub-regions, and (ii) inputting, by the contamination detecting system, the input image into a visibility calculating unit, to thereby instruct the visibility calculating unit to (ii-1) generate each edge map for each of the sub-regions by referring to differences in brightness between each of pixels and its neighboring pixels among pixels of the input image, and thus (ii-2) generate each degree of frame visibility for each of the sub-regions; and

(c) instructing, by the contamination detecting system, a contamination determining unit to determine whether the contamination exists on the camera lens by referring to the degree of frame contamination and the degree of frame visibility.

2. The method of claim 1, wherein the contamination detecting system instructs the contamination detection time determining unit to (i) match each of previous features, extracted from a previous input image acquired before a current time point from the camera, with each of current features, extracted from a current input image acquired at the current time point from the camera, to thereby generate a ratio of matched previous-current features, and (ii) in response to determining that the ratio of the matched previous-current features is greater than or equal to the preset matched feature ratio, (ii-1) acquire each of previous-current feature disparity vectors by using each of positions and each of directions between said each of previous features and said each of current features, (ii-2) calculate the feature disparity median from a distribution of magnitudes of each of the previous-current feature disparity vectors and (ii-3) determine whether the feature disparity median is greater than the preset feature disparity median.

3. The method of claim 2, wherein the contamination detecting system instructs the contamination detection time determining unit to (i) compare the traveled distance and the preset traveled distance by referring to the movement information acquired from the external sensor, and (i-1) in response to determining that the traveled distance is greater than the preset traveled distance, perform processes of said step (b), and (i-2) in response to determining that the traveled distance is smaller than or equal to the preset traveled distance, acquire the rotated angle from the external sensor, and (ii) compare the rotated angle and the preset rotated angle by referring to the movement information acquired from the external sensor, and (ii-1) in response to determining that the rotated angle is greater than the preset rotated angle, perform the processes of said step (b), and (ii-2) in response to determining that the rotated angle is smaller than or equal to the preset rotated angle, acquire the previous features and the current features, and (iii) compare the ratio of the matched previous-current features with the preset matched feature ratio, and (iii-1) in response to determining that the ratio of the matched previous-current features is smaller than the preset matched feature ratio, perform the processes of said step (b) and (iii-2) in response to determining that the ratio of the matched previous-current features is greater than or equal to the preset matched feature ratio, acquire each of the previous-current feature disparity vectors, and (iv) compare the feature disparity median with the preset feature disparity median, and (iv-1) in response to determining that the feature disparity median is greater than the preset feature disparity median, perform the processes of said step (b), and (iv-2) in response to determining that the feature disparity median is smaller than or equal to the preset feature disparity median, terminate a process for determining whether the contamination exists on the camera lens.

4. The method of claim 1, wherein, at the step of (b), on condition that predetermined n contamination states including at least a transparent state, a translucent state, and an opaque state are set, the contamination detecting system instructs the contamination calculating unit to (i) apply the CNN operations to the input image, to thereby generate each output value for each of the sub-regions and thus generate a contamination probability map representing each contamination state for each of the sub-regions by using said each output value, and (ii) apply each preset weight vector to the contamination probability map, to thereby generate said each degree of frame contamination for each of the sub-regions.

5. The method of claim 4, wherein as the contamination state gets closer to the opaque state, among the n predetermined contamination states, a weight of said each preset weight vector is increased, and wherein, as the contamination state gets closer to the transparent state, among the n predetermined contamination states, within a predetermined state threshold, on condition that the weight of said each preset weight vector is set to be a negative value, the contamination detecting system instructs the contamination calculating unit to determine said each degree of frame contamination for each of the sub-regions by applying said each preset weight vector to the contamination probability map.

6. A computing device for determining whether contamination exists on a camera lens in real-time, comprising:

at least one memory that stores instructions;
at least one processor configured to execute the instructions to perform processes of: (I) in response to generating an input image by a camera, instructing a contamination detection time determining unit to determine whether a credibility indicating a degree of suitability of the input image being used for detecting the contamination on the camera lens satisfies at least one preset condition, wherein in response to acquiring movement information, which includes at least one piece of information on a traveled distance and a rotated angle of the camera, from at least one external sensor, the processor transmits the movement information to the contamination detection time determining unit, to thereby instruct the contamination detection time determining unit to determine whether the credibility satisfies said at least one preset condition by (i) determining whether the traveled distance is greater than a preset traveled distance, (ii) determining whether the rotated angle is greater than a preset rotated angle, (iii) determining whether a ratio of matched features generated by matching features extracted from the input image acquired from the camera are less than a preset matched feature ratio, and (iv) determining whether a feature disparity median generated by calculating a median of feature disparities of the input image is greater than a preset feature disparity median; (II) in response to determining that the credibility of the input image satisfies the preset condition, (i) inputting the input image into a contamination calculating unit, to thereby instruct the contamination calculating unit to (i-1) classify each of contamination states for each of sub-regions in the input image by applying one or more CNN (Convolutional Neural Network) operations to the input image, and thus (i-2) generate each degree of frame contamination for each of the sub-regions, and (ii) inputting the input image into a visibility calculating unit, to thereby instruct the visibility calculating unit to (ii-1) generate each edge map for each of the sub-regions by referring to differences in brightness between each of pixels and its neighboring pixels among pixels of the input image, and thus (ii-2) generate each degree of frame visibility for each of the sub-regions; and (III) instructing a contamination determining unit to determine whether the contamination exists on the camera lens by referring to the degree of frame contamination and the degree of frame visibility.

7. The computing device of claim 6, wherein the processor instructs the contamination detection time determining unit to (i) match each of previous features, extracted from a previous input image acquired before a current time point from the camera, with each of current features, extracted from a current input image acquired at the current time point from the camera, to thereby generate a ratio of matched previous-current features, and (ii) in response to determining that the ratio of the matched previous-current features is greater than or equal to the preset matched feature ratio, (ii-1) acquire each of previous-current feature disparity vectors by using each of positions and each of directions between said each of previous features and said each of current features, (ii-2) calculate the feature disparity median from a distribution of magnitudes of each of the previous-current feature disparity vectors and (ii-3) determine whether the feature disparity median is greater than the preset feature disparity median.

8. The computing device of claim 7, wherein the processor instructs the contamination detection time determining unit to (i) compare the traveled distance and the preset traveled distance by referring to the movement information acquired from the external sensor, and (i-1) in response to determining that the traveled distance is greater than the preset traveled distance, perform processes of said step (b), and (i-2) in response to determining that the traveled distance is smaller than or equal to the preset traveled distance, acquire the rotated angle from the external sensor, and (ii) compare the rotated angle and the preset rotated angle by referring to the movement information acquired from the external sensor, and (ii-1) in response to determining that the rotated angle is greater than the preset rotated angle, perform the processes of said step (b), and (ii-2) in response to determining that the rotated angle is smaller than or equal to the preset rotated angle, acquire the previous features and the current features, and (iii) compare the ratio of the matched previous-current features with the preset matched feature ratio, and (iii-1) in response to determining that the ratio of the matched previous-current features is smaller than the preset matched feature ratio, perform the processes of said step (b) and (iii-2) in response to determining that the ratio of the matched previous-current features is greater than or equal to the preset matched feature ratio, acquire each of the previous-current feature disparity vectors, and (iv) compare the feature disparity median with the preset feature disparity median, and (iv-1) in response to determining that the feature disparity median is greater than the preset feature disparity median, perform the processes of said step (b), and (iv-2) in response to determining that the feature disparity median is smaller than or equal to the preset feature disparity median, terminate a process for determining whether the contamination exists on the camera lens.

9. The computing device of claim 6, wherein, at the process of (II), on condition that predetermined n contamination states including at least a transparent state, a translucent state, and an opaque state are set, the processor instructs the contamination calculating unit to (i) apply the CNN operations to the input image, to thereby generate each output value for each of the sub-regions and thus generate a contamination probability map representing each contamination state for each of the sub-regions by using said each output value, and (ii) apply each preset weight vector to the contamination probability map, to thereby generate said each degree of frame contamination for each of the sub-regions.

**Patentansprüche**

1. Verfahren zur Bestimmung der Anwesenheit von Verunreinigungen auf einer Kameralinse in Echtzeit, das die folgenden Schritte umfasst:

   (a) als Reaktion auf die Erzeugung eines Eingangsbildes durch eine Kamera, Anweisung, durch ein Verunreinigungserkennungssystem, einer Verunreinigungserkennungszeit-Bestimmungseinheit, um zu bestimmen, ob eine Glaubwürdigkeit, die einen Grad der Eignung des Eingangsbildes anzeigt, das zur Erkennung der Verunreinigung auf der Kameralinse verwendet wird, mindestens eine voreingestellte Bedingung erfüllt, wobei als Reaktion auf die Erfassung von Bewegungsinformationen, die mindestens eine Information über eine zurückgelegte Entfernung und einen Drehwinkel der Kamera von mindestens einem externen Sensor beinhalten, das Verunreinigungserkennungssystem die Bewegungsinformationen an die Verunreinigungserkennungszeit-Bestimmungseinheit überträgt, um dadurch die Verunreinigungserkennungszeit-Bestimmungseinheit anzuweisen, zu bestimmen, ob die Glaubwürdigkeit die mindestens eine voreingestellte Bedingung erfüllt, indem (i) bestimmt wird, ob die zurückgelegte Entfernung größer als eine voreingestellte zurückgelegte Entfernung ist, (ii) bestimmt wird, ob der Drehwinkel größer als ein voreingestellter Drehwinkel ist, (iii) bestimmt wird, ob ein Verhältnis von abgeglichenen Merkmalen, das durch abgeglichene Merkmale erzeugt wird, die aus dem Eingangsbild extrahiert werden, das von der Kamera erfasst wird, kleiner als ein voreingestelltes Verhältnis von abgeglichenen Merkmalen ist, und (iv) bestimmt wird, ob ein Mittelwert der Merkmalsunterschiede, der durch Berechnung eines Mittelwerts der Merkmalsunterschiede des Eingangsbildes erzeugt wird, größer als ein voreingestellter Mittelwert der Merkmalsunterschiede ist.
   (b) als Reaktion auf die Bestimmung, dass die Glaubwürdigkeit des Eingangsbildes die voreingestellte Bedingung erfüllt, (i) Eingebung, durch das Verunreinigungserkennungssystem, des Eingangsbildes in eine Verunreinigungsberechnungseinheit, um dadurch die Verunreinigungsberechnungseinheit anzuweisen zur (i-1) Klassifizierung jeder Verunreinigungszustände für jeden der Unterbereiche in dem Eingangsbild, indem eine oder mehrere CNN-(Engl. Convolutional Neural Network)Operationen auf das Eingangsbild angewendet werden und somit (i-2) Erzeugung jedes Grades der Rahmenverunreinigung für jeden der Unterbereiche und (ii) Eingebung, durch das Verunreinigungserkennungssystem, des Eingangsbildes in eine Sichtbarkeitsberechnungseinheit, um dadurch die Sichtbarkeitsberechnungseinheit anzuweisen zur (ii-1) Erzeugung jeder Kantenkarte für jeden der Unterbereiche durch Bezugnahme auf Helligkeitsunterschiede zwischen jedem der Pixel und seinen Nachbarpixeln unter Pixeln des Eingangsbildes und somit (ii-2) Erzeugung jedes Grades der Rahmensichtbarkeit für jeden der Unterbereiche; und
   (c) Anweisung, durch das Verunreinigungserkennungssystem, einer Verunreinigungsbestimmungseinheit, um zu bestimmen, ob die Verunreinigung auf der Kameralinse vorhanden ist, indem auf den Grad der Rahmenverunreinigung und den Grad der Rahmensichtbarkeit Bezug genommen wird.

2. Verfahren nach Anspruch 1, wobei das Verunreinigungserkennungssystem die Verunreinigungserkennungszeit-Bestimmungseinheit anweist zur (i) Abgleichung jedes der vorherigen Merkmale, die aus einem vorherigen Eingangsbild extrahiert wurde, das vor einem aktuellen Zeitpunkt von der Kamera erfasst wurde, mit jedem der aktuellen Merkmale, die aus einem aktuellen Eingangsbild extrahiert wurden, das zum aktuellen Zeitpunkt von der Kamera erfasst wurde, um dadurch ein Verhältnis der abgeglichenen vorherigen aktuellen Merkmale zu erzeugen, und (ii) als Reaktion auf die Bestimmung, dass das Verhältnis der abgeglichenen vorherigen aktuellen Merkmale größer oder gleich dem voreingestellten abgeglichenen Merkmalsverhältnis ist, (ii-1) Erfassung jedes der vorherigen aktuellen Merkmalsunterschiedsvektoren durch Verwendung jeder der Positionen und jeder der Richtungen zwischen jedem der vorherigen Merkmale und jedem der aktuellen Merkmale, (ii-2) Berechnung des Mittelwerts der Merkmalsunterschiede aus einer Verteilung der Größen von jedem der vorherigen aktuellen Merkmalsunterschiedsvektoren und (ii-3) Bestimmung, ob der Mittelwert der Merkmalsunterschiede größer als der voreingestellte Mittelwert der Merkmalsunterschiede ist.

3. Verfahren nach Anspruch 2, wobei das Verunreinigungserkennungssystem die Verunreinigungserkennungszeit-Bestimmungseinheit anweist zur (i) Vergleichung der zurückgelegten Entfernung und der voreingestellten zurückgelegten Entfernung unter Bezugnahme auf die Bewegungsinformationen, die von dem externen Sensor erfasst werden, und (i-1) als Reaktion auf die Bestimmung, dass die zurückgelegte Entfernung größer als die voreingestellte zurückgelegte Entfernung ist, Prozesse des Schritts (b) auszuführen, und (i-2) als Reaktion auf die Bestimmung, dass die zurückgelegte Entfernung kleiner als oder gleich der voreingestellten zurückgelegten Entfernung ist, Erfassung des Drehwinkels von dem externen Sensor, und (ii) Vergleichung des Drehwinkels und des voreingestellten Drehwinkels unter Bezugnahme auf die Bewegungsinformationen, die von dem externen Sensor erfasst werden, und (ii-1) als Reaktion auf die Bestimmung, dass der Drehwinkel größer als der voreingestellte Drehwinkel ist, Durchführung der Prozesse des Schritts (b), und (ii-2) als Reaktion auf die Bestimmung, dass der Drehwinkel kleiner oder gleich dem voreingestellten Drehwinkel ist, Erfassung der vorherigen Merkmale und der aktuellen Merkmale, und (iii) Vergleichung des Verhältnisses der abgeglichenen vorherigen aktuellen Merkmale mit dem voreingestellten abgeglichenen Merkmalsverhältnis, und (iii-1) als Reaktion auf die Bestimmung, dass das Verhältnis der abgeglichenen vorherigen aktuellen Merkmale kleiner als das voreingestellte abgeglichene Merkmalsverhältnis ist, Durchführung der Prozesse des Schritts (b) und (iii-2) als Reaktion auf die Bestimmung, dass das Verhältnis der abgeglichenen vorherigen aktuellen Merkmale größer als oder gleich dem voreingestellten abgeglichenen Merkmalsverhältnis ist, Erfassung jedes der vorherigen aktuellen Merkmalsunterschiedsvektoren, und (iv) Vergleichung des Mittelwerts der Merkmalsunterschied mit dem voreingestellten Mittelwert der Merkmalsunterschiede, und (iv-1) als Reaktion auf die Bestimmung, dass der Mittelwert der Merkmalsunterschiede größer als der voreingestellte Mittelwert der Merkmalsunterschiede ist, Durchführung der Prozesse des Schritts (b), und (iv-2) als Reaktion auf die Bestimmung, dass der Mittelwert der Merkmalsunterschiede kleiner oder gleich dem voreingestellten Mittelwert der Merkmalsunterschiede ist, Beendung eines Prozesses zur Bestimmung, ob die Verunreinigung auf der Kameralinse existiert.

4. Verfahren nach Anspruch 1, wobei im Schritt (b) unter der Bedingung, dass vorbestimmte n-Verunreinigungszustände, die mindestens einen transparenten Zustand, einen durchscheinenden Zustand und einen undurchsichtigen Zustand beinhalten, eingestellt sind, das Verunreinigungserkennungssystem die Verunreinigungsberechnungseinheit anweist zur (i) Anwendung der CNN-Operationen auf das Eingangsbild, um dadurch jeden Ausgangswert für jeden der Unterbereiche zu erzeugen und somit eine Verunreinigungswahrscheinlichkeitskarte zu erzeugen, die jeden Verunreinigungszustand für jeden der Unterbereiche darstellt, indem jeder Ausgangswert verwendet wird, und (ii) Anwendung jedes voreingestellten Gewichtsvektors auf die Verunreinigungswahrscheinlichkeitskarte, um dadurch den jeweiligen Grad der Rahmenverunreinigung für jeden der Unterbereiche zu erzeugen.

5. Verfahren nach Anspruch 4, wobei, wenn sich der Verunreinigungszustand unter den vorbestimmten n-Verunreinigungszuständen dem undurchsichtigen Zustand nähert, ein Gewicht jedes voreingestellten Gewichtsvektors erhöht wird, und wobei, wenn sich der Verunreinigungszustand unter den vorbestimmten n-Verunreinigungszuständen dem transparenten Zustand nähert, innerhalb eines vorbestimmten Zustandsschwellenwerts, unter der Bedingung, dass das Gewicht jedes voreingestellten Gewichtungsvektors auf einen negativen Wert eingestellt ist, das Verunreinigungserkennungssystem die Verunreinigungsberechnungseinheit anweist, den jeweiligen Grad der Rahmenverunreinigung für jeden der Unterbereiche zu bestimmen, indem der jeweilige voreingestellte Gewichtungsvektor auf die Verunreinigungswahrscheinlichkeitskarte angewendet wird.

6. Computervorrichtung zur Bestimmung der Anwesenheit von Verunreinigungen auf einer Kameralinse in Echtzeit, umfassend:

mindestens einen Speicher, der Anweisungen speichert;
mindestens einen Prozessor, der so konfiguriert ist, dass er die Anweisungen ausführt, um folgende Prozesse durchzuführen: (I) als Reaktion auf die Erzeugung eines Eingangsbildes durch eine Kamera, Anweisung einer Verunreinigungserkennungszeit-Bestimmungseinheit, um zu bestimmen, ob eine Glaubwürdigkeit, die einen Grad der Eignung des Eingangsbildes für die Erkennung der Verunreinigung auf der Kameralinse angibt, mindestens eine voreingestellte Bedingung erfüllt, wobei als Reaktion auf die Erfassung von Bewegungsinformationen, die mindestens eine Information über eine zurückgelegte Entfernung und einen Drehwinkel der Kamera von mindestens einem externen Sensor beinhalten, der Prozessor die Bewegungsinformationen an die Verunreinigungserkennungszeit-Bestimmungseinheit überträgt, um dadurch die Verunreinigungserkennungszeit-Bestimmungseinheit anzuweisen, zu bestimmen, ob die Glaubwürdigkeit die mindestens eine voreingestellte Bedingung erfüllt, indem (i) bestimmt wird, ob die zurückgelegte Entfernung größer als eine voreingestellte zurückgelegte Entfernung ist, (ii) bestimmt wird, ob der Drehwinkel größer als ein voreingestellter Drehwinkel ist, (iii) bestimmt wird, ob ein Verhältnis von abgeglichenen Merkmalen, die durch die Abgleichung von Merkmalen erzeugt wurden, die aus dem Eingangsbild extrahiert wurden, das von der Kamera erfasste wurde, kleiner als ein voreingestelltes Verhältnis abgeglichener Merkmale ist, und (iv) bestimmt wird, ob ein Mittelwert der Merkmalsunterschiede, der durch Berechnung eines Mittelwerts des Eingabebildes erzeugt wird, größer als ein voreingestellter Mittelwert der Merkmalsunterschiede ist; (II) als Reaktion auf die Bestimmung, dass die Glaubwürdigkeit des Eingabebildes die voreingestellte Bedingung erfüllt, (i) Eingebung des Eingabebildes in eine Verunreinigungsberechnungseinheit, um dadurch die Verunreinigungsberechnungseinheit anzuweisen zur (i-1) Klassifizierung jedes Verunreinigungszustands für jeden der Unterbereiche in dem Eingabebild durch Anwenden einer oder mehrerer CNN-Operationen (Convolutional Neural Network) auf das Eingabebild und somit (i-2) Erzeugung jedes Grades der Rahmenverunreinigung für jeden der Unterbereiche, und (ii) Eingebung des Eingabebildes in eine Sichtbarkeitsberechnungseinheit, um dadurch die Sichtbarkeitsberechnungseinheit anzuweisen zur (ii-1) Erzeugung jeder Kantenkarte für jeden der Unterbereiche, indem sie sich auf Unterschiede in der Helligkeit zwischen jedem der Pixel und seinen benachbarten Pixeln unter den Pixeln des Eingabebildes bezieht, und somit (ii-2) Erzeugung jedes Grades der Bildsichtbarkeit für jeden der Unterbereiche; und (III) Anweisung einer Verunreinigungsbestimmungseinheit, um zu bestimmen, ob die Verunreinigung auf dem Kameralinse vorhanden ist, indem sie sich auf den Grad der Rahmenverunreinigung und den Grad der Rahmensichtbarkeit bezieht.

7. Computervorrichtung nach Anspruch 6, wobei der Prozessor die Verunreinigungserkennungszeit-Bestimmungseinheit anweist zur (i) Abgleichung jedes der vorherigen Merkmale, die aus einem vorherigen Eingangsbild extrahiert wurden, das vor einem aktuellen Zeitpunkt von der Kamera erfasst wurde, mit jedem der aktuellen Merkmale, die aus einem aktuellen Eingangsbild extrahiert wurden, das zum aktuellen Zeitpunkt von der Kamera erfasst wurde, um dadurch ein Verhältnis der abgeglichenen vorherigen aktuellen Merkmale zu erzeugen, und (ii) als Reaktion auf die Bestimmung, dass das Verhältnis der abgeglichenen vorherigen aktuellen Merkmale größer oder gleich dem voreingestellten abgeglichenen Merkmalsverhältnis ist, (ii-1) Erfassung von jedem der vorherigen aktuellen Merkmalsunterschiedsvektoren durch Verwendung jeder der Positionen und jeder der Richtungen zwischen jedem der vorherigen Merkmale und jedem der aktuellen Merkmale, (ii-2) Berechnung des Mittelwerts der Merkmalsunterschiede aus einer Verteilung der Größen von jedem der vorherigen aktuellen Merkmalsunterschiedsvektoren und (ii-3) Bestimmung, ob der Mittelwert der Merkmalsunterschiede größer als der voreingestellte Mittelwert der Merkmalsunterschiede ist.

8. Computervorrichtung nach Anspruch 7, wobei der Prozessor die Verunreinigungserkennungszeit-Bestimmungseinheit anweist zur (i) Vergleichung der zurückgelegten Entfernung und der voreingestellten zurückgelegten Entfernung unter Bezugnahme auf die Bewegungsinformationen, die von dem externen Sensor erfasst werden, und (i-1) als Reaktion auf die Bestimmung, dass die zurückgelegte Entfernung größer als die voreingestellte zurückgelegte Entfernung ist, Prozesse des Schritts (b) auszuführen, und (i-2) als Reaktion auf die Bestimmung, dass die zurückgelegte Entfernung kleiner als oder gleich der voreingestellten zurückgelegten Entfernung ist, Erfassung des Drehwinkels von dem externen Sensor, und (ii) Vergleichung des Drehwinkels und des voreingestellten Drehwinkels unter Bezugnahme auf die Bewegungsinformationen, die von dem externen Sensor erfasst werden, und (ii-1) als Reaktion auf die Bestimmung, dass der Drehwinkel größer als der voreingestellte Drehwinkel ist, Durchführung der Prozesse des Schritts (b), und (ii-2) als Reaktion auf die Bestimmung, dass der Drehwinkel kleiner oder gleich dem voreingestellten Drehwinkel ist, Erfassung der vorherigen Merkmale und der aktuellen Merkmale, und (iii) Vergleichung des Verhältnisses der abgeglichenen vorherigen aktuellen Merkmale mit dem voreingestellten abgeglichenen Merkmalsverhältnis, und (iii-1) als Reaktion auf die Bestimmung, dass das Verhältnis der abgeglichenen vorherigen aktuellen Merkmale kleiner als das voreingestellte abgeglichene Merkmalsverhältnis ist, Durchführung der Prozesse des Schritts (b) und (iii-2) als Reaktion auf die Bestimmung, dass das Verhältnis der abgeglichenen vorherigen aktuellen Merkmale größer als oder gleich dem voreingestellten abgeglichenen Merkmalsverhältnis ist, Erfassung von jedem der vorherigen aktuellen Merkmalsunterschiedsvektoren, und (iv) Vergleichung des Mittelwerts der Merkmalsunterschied mit dem voreingestellten Mittelwert der Merkmalsunterschiede, und (iv-1) als Reaktion auf die Bestimmung, dass der Mittelwert der Merkmalsunterschiede größer als der voreingestellte Mittelwert der Merkmalsunterschiede ist, Durchführung der Prozesse des Schritts (b), und (iv-2) als Reaktion auf die Bestimmung, dass der Mittelwert der Merkmalsunterschiede kleiner oder gleich dem voreingestellten Mittelwert der Merkmalsunterschiede ist, Beendung eines Prozesses zur Bestimmung, ob die Verunreinigung auf der Kameralinse existiert.

9. Computervorrichtung nach Anspruch 6, wobei in dem Prozess (II) unter der Bedingung, dass vorbestimmte n-Verunreinigungszustände, die mindestens einen transparenten Zustand, einen durchscheinenden Zustand und einen undurchsichtigen Zustand beinhalten, eingestellt sind, der Prozessor die Verunreinigungsberechnungseinheit anweist zur (i) Anwendung der CNN-Operationen auf das Eingangsbild, um dadurch jeden Ausgangswert für jeden der Unterbereiche zu erzeugen und somit eine Verunreinigungswahrscheinlichkeitskarte zu erzeugen, die jeden Verunreinigungszustand für jeden der Unterbereiche darstellt, indem jeder Ausgangswert verwendet wird, und (ii) Anwendung jedes voreingestellten Gewichtsvektors auf die Verunreinigungswahrscheinlichkeitskarte, um dadurch den jeweiligen Grad der Rahmenverunreinigung für jeden der Unterbereiche zu erzeugen.

**Revendications**

1. Procédé de détermination en temps réel de la présence de contamination sur un objectif de caméra, comprenant les étapes suivantes :

   (a) en réponse à la génération d'une image d'entrée par une caméra, un système de détection de contamination ordonne à une unité de détermination de temps de détection de contamination de déterminer si un indicateur de crédibilité, reflétant un degré d'adéquation de l'image d'entrée utilisée pour la détection de la contamination sur l'objectif de caméra, satisfait au moins une condition prédéfinie, dans lequel en réponse à l'acquisition d'informations de mouvement, incluant au moins une information relative à une distance parcourue et un angle de rotation de la caméra, à partir d'au moins un capteur externe, le système de détection de contamination transmet l'information de mouvement à l'unité de détermination de temps de détection de contamination, afin d'ordonner ainsi à l'unité de détermination de temps de détection de contamination si l'indicateur de crédibilité satisfait à au moins une condition prédéfinie, en : (i) déterminant si la distance parcourue est supérieure à une distance parcourue prédéfinie, (ii) déterminant si l'angle de rotation est supérieur à un angle de rotation prédéfini, (iii) déterminant si un rapport de caractéristiques appariées, générées par l'extraction de caractéristiques appariées de l'image d'entrée acquise par la caméra, est inférieur à un rapport de caractéristiques appariées prédéfini et (iv) déterminer si la médiane de disparité des caractéristiques générée en calculant une médiane de disparités des caractéristiques de l'image d'entrée est supérieure à une médiane de disparité des caractéristiques prédéfinie ;

   (b) en réponse à la détermination que la crédibilité de l'image d'entrée satisfait à la condition prédéfinie, (i) entrer, par le système de détection de contamination, l'image d'entrée dans une unité de calcul de contamination, afin d'indiquer ainsi à l'unité de calcul de contamination de (i-1) classifier chaque état de contamination pour chacune des sous-régions de l'image d'entrée en appliquant une ou plusieurs opérations CNN (réseau neuronal convolutif) à l'image d'entrée, et ainsi (i-2) générer chaque degré de contamination d'image pour chacune des sous-régions, et (ii) entrer, par le système de détection de contamination, l'image d'entrée dans une unité de calcul de visibilité, afin d'indiquer ainsi à l'unité de calcul de visibilité de (ii-1) générer chaque carte de contours pour chacune des sous-régions en se référant aux différences de luminosité entre chaque pixel et ses pixels voisins parmi les pixels de l'image d'entrée, et ainsi (ii-2) générer chaque degré de visibilité d'image pour chacune des sous-régions ; et

   c) ordonner, par le système de détection de contamination, à une unité de détermination de contamination de déterminer si l'objectif de caméra photo est contaminée, en se référant au degré de contamination d'image et au degré de visibilité d'image.

2. Procédé selon la revendication 1, dans lequel le système de détection de contamination ordonne à l'unité de détermination de temps de détection de contamination : (i) de faire correspondre chacune des caractéristiques précédentes, extraites d'une image d'entrée précédente acquise avant un instant actuel par la caméra, avec chacune des caractéristiques actuelles, extraites d'une image d'entrée actuelle acquise à l'instant actuel par la caméra, afin de générer un rapport de caractéristiques précédentes-actuelles appariées et (ii) en réponse à la détermination que le rapport de caractéristiques précédentes-actuelles est supérieur ou égal au rapport de caractéristiques appariées prédéfini, (ii-1) d'acquérir chacune des vecteurs de disparité des caractéristiques précédentes-actuelles en utilisant chacune des positions et chacune des directions entre chacune desdites caractéristiques précédentes et chacune desdites caractéristiques actuelles, (ii-2) de calculer la médiane de disparité des caractéristiques à partir d'une distribution des amplitudes de chacun des vecteurs de disparité des caractéristiques précédentes-actuelles ; et (ii-3) de déterminer si la médiane de disparité des caractéristiques est supérieure à la médiane de disparité des caractéristiques prédéfinie.

3. Procédé selon la revendication 2, dans lequel le système de détection de contamination ordonne à l'unité de détermination de temps de détection de contamination de : (i) comparer la distance parcourue et la distance parcourue prédéfinie en se référant aux informations de mouvement acquises à partir du capteur externe et (i-1) en réponse à la détermination que la distance parcourue est supérieure à la distance parcourue prédéfinie, exécuter les opérations de l'étape (b) et (i-2) en réponse à la détermination que la distance parcourue est inférieure ou égale à la distance parcourue prédéfinie, acquérir l'angle de rotation à partir du capteur externe et (ii) comparer l'angle de rotation et l'angle de rotation prédéfini en se référant aux informations de mouvement acquises à partir du capteur externe et (ii-1) en réponse à la détermination que l'angle de rotation est supérieur à l'angle de rotation prédéfini, exécuter les opérations de l'étape (b) ; (ii-2) en réponse à la détermination que l'angle de rotation est inférieur ou égal à l'angle de rotation prédéfini, acquérir les caractéristiques précédentes et les caractéristiques actuelles et (iii) comparer le rapport de caractéristiques précédentes et actuelles appariées avec le rapport de caractéristiques appariées prédéfinies et (iii-1) en réponse à la détermination que le rapport de caractéristiques précédentes-actuelles appariées est inférieur au rapport de caractéristiques appariées prédéfini, effectuer les opérations de l'étape (b) et (iii-2) en réponse à la détermination que le rapport de caractéristiques précédentes-actuelles appariées est supérieur ou égal au rapport de caractéristiques appariées prédéfini, acquérir chacun des vecteurs de disparité des caractéristiques précédentes- actuelles, et (iv) comparer la médiane de disparité des caractéristiques avec la médiane de disparité des caractéristiques prédéfinie, et (iv-1) en réponse à la détermination que la médiane de disparité des caractéristiques est supérieure à la médiane de disparité des caractéristiques prédéfinie, effectuer les opérations de l'étape (b) et (iv-2) en réponse à la détermination que la médiane de disparité des caractéristiques est inférieure ou égale à la médiane de disparité des caractéristiques prédéfinie, interrompre un processus de détermination de la présence de contamination sur l'objectif de la caméra.

4. Procédé selon la revendication 1, dans lequel, à l'étape (b), à condition que n états de contamination prédéterminés, comprenant au moins un état transparent, un état translucide et un état opaque, soient définis, le système de détection de contamination ordonne à l'unité de calcul de contamination : (i) d'appliquer les opérations du réseau neuronal convolutif (CNN) à l'image d'entrée, afin de générer ainsi chaque valeur de sortie pour chacune des sous-régions et ainsi générer une carte de probabilité de contamination représentant chaque état de contamination pour chacune des sous-régions à l'aide de ladite valeur de sortie et (ii) d'appliquer chaque vecteur de pondération prédéfini à la carte de probabilité de contamination, afin de générer ainsi chaque degré de contamination d'image pour chacune des sous-régions.

5. Procédé selon la revendication 4, dans lequel, lorsque l'état de contamination se rapproche de l'état opaque parmi les n états de contamination prédéterminés, un poids de chaque vecteur de poids prédéfini est augmenté et dans lequel, lorsque l'état de contamination se rapproche de l'état transparent parmi les n états de contamination prédéterminés, dans une limite d'état prédéterminée, à condition que le poids de chaque vecteur de poids prédéfini soit négatif, le système de détection de contamination ordonne à l'unité de calcul de contamination de déterminer chaque degré de contamination d'image pour chacune des sous-régions en appliquant chaque vecteur de poids prédéfini à la carte de probabilité de contamination.

6. Dispositif informatique pour déterminer en temps réel la présence de contamination sur un objectif de caméra, comprenant :

au moins une mémoire qui mémorise des instructions ;
au moins un processeur configuré pour exécuter les opérations suivantes : (I) en réponse à la génération d'une image d'entrée par une caméra, ordonner à une unité de détermination de temps de détection de contamination de déterminer si une crédibilité indiquant un degré d'adéquation de l'image d'entrée utilisée pour détecter la contamination sur l'objectif de la caméra satisfait au moins une condition prédéfinie, dans lequel en réponse à l'acquisition d'informations de mouvement, qui comprennent au moins une information relative à une distance parcourue et un angle de rotation de la caméra, à partir d'au moins un capteur externe, le processeur transmet les informations de mouvement à l'unité de détermination de temps de détection de contamination, afin d'ordonner ainsi à l'unité de détermination de temps de détection de contamination de déterminer si la crédibilité satisfait ladite condition prédéfinie en : (i) déterminant si la distance parcourue est supérieure à une distance parcourue prédéfinie ; (ii) déterminant si l'angle de rotation est supérieur à un angle de rotation prédéfini ; (iii) déterminant si un rapport de caractéristiques appariées, généré par la correspondance de caractéristiques extraites de l'image d'entrée acquise par la caméra, est inférieur à un rapport de caractéristiques appariées prédéfini ; et (iv) déterminant si une médiane de disparité des caractéristiques générée en calculant une médiane des disparités de caractéristiques de l'image d'entrée est supérieure à une médiane de disparité de caractéristiques prédéfinie ; (II) en réponse à la détermination que la crédibilité de l'image d'entrée satisfait à la condition prédéfinie (i) entrer l'image d'entrée dans une unité de calcul de contamination, afin d'indiquer à l'unité de calcul de contamination de (i-1) classifier chaque état de contamination pour chacune des sous-régions de l'image d'entrée en appliquant une ou plusieurs opérations CNN (réseau neuronal convolutif) à l'image d'entrée, et ainsi (i-2) générer chaque degré de contamination d'image pour chacune des sous-régions, et (ii) entrer l'image d'entrée dans une unité de calcul de visibilité, pour ordonnée ainsi à l'unité de calcul de visibilité de (ii-1) générer chaque carte de contours pour chacune des sous-régions en se référant aux différences de luminosité entre chaque pixel et ses pixels voisins parmi les pixels de l'image d'entrée, et ainsi (ii-2) générer chaque degré de visibilité d'image pour chacune des sous-régions ; et (III) ordonner à une unité de détermination de contamination de déterminer si la présence de contamination sur l'objectif de la caméra en se référant au degré de contamination d'image et au degré de visibilité d'image.

7. Dispositif informatique selon la revendication 6, dans lequel le processeur ordonne à l'unité de détermination de temps de détection de contamination de : (i) faire correspondre chacune des caractéristiques précédentes, extraites d'une image d'entrée précédente acquise avant un instant donné par la caméra, avec chacune des caractéristiques actuelles, extraites d'une image d'entrée actuelle acquise à l'instant actuel par la caméra, afin de générer un rapport de caractéristiques précédentes/actuelles appariées et (ii) en réponse à la détermination que le rapport des caractéristiques précédentes/actuelles appariées est supérieur ou égal au rapport de caractéristiques appariées prédéfini, (ii-1) acquérir chacun des vecteurs de disparité des caractéristiques précédentes/actuelles en utilisant chacune des positions et chacune des directions entre chacune des caractéristiques précédentes et chacune des caractéristiques actuelles, (ii-2) calculer la médiane de disparité des caractéristiques à partir d'une distribution des amplitudes de chacun des vecteurs de disparité des caractéristiques précédentes/actuelles ; et (ii-3) déterminer si la médiane de disparité des caractéristiques est supérieure à la médiane de disparité des caractéristiques prédéfinie.

8. Dispositif informatique selon la revendication 7, dans lequel le processeur ordonne à l'unité de détermination du temps de détection de contamination de : (i) comparer la distance parcourue et la distance parcourue prédéfinie en se référant aux informations de mouvement acquises à partir du capteur externe et (i-1) en réponse à la détermination que la distance parcourue est supérieure à la distance parcourue prédéfinie, exécuter les opérations de ladite étape (b) et (i-2) en réponse à la détermination que la distance parcourue est inférieure ou égale à la distance parcourue prédéfinie, acquérir l'angle de rotation à partir du capteur externe et (ii) comparer l'angle de rotation et l'angle de rotation prédéfini en se référant aux informations de mouvement acquises à partir du capteur externe et (ii-1) en réponse à la détermination que l'angle de rotation est supérieur à l'angle de rotation prédéfini, exécuter les opérations de l'étape (b) et (ii-2) en réponse à la détermination que l'angle de rotation est inférieur ou égal à l'angle de rotation prédéfini, acquérir les caractéristiques précédentes et les caractéristiques actuelles ; et (iii) comparer le rapport des caractéristiques précédentes et actuelles appariées avec la valeur prédéfinie et (iii-1) en réponse à la détermination que le rapport des caractéristiques appariées précédentes-actuelles est inférieur au rapport prédéfini, effectuer les opérations de ladite étape (b) et (iii-2) en réponse à la détermination que le rapport des caractéristiques appariées précédentes-actuelles est supérieur ou égal au rapport prédéfini, acquérir chaque vecteur de disparité des caractéristiques précédentes-actuelles et (iv) comparer la médiane de disparité des caractéristiques à la médiane prédéfinie et (iv-1) si la médiane de disparité des caractéristiques est supérieure à la médiane prédéfinie, effectuer les opérations de l'étape (b) et (iv-2) en réponse à la détermination que la médiane de disparité des caractéristiques est inférieure ou égale à la médiane de disparité des caractéristiques prédéfinie, interrompre un processus de détermination de la présence de contamination sur l'objectif de caméra.

9. Dispositif de calcul selon la revendication 6, dans lequel, au cours du processus (II), à condition que n états de contamination prédéterminés, comprenant au moins un état transparent, un état translucide et un état opaque, soient définis, le processeur ordonne à l'unité de calcul de contamination (i) d'appliquer les opérations CNN à l'image d'entrée, afin de générer ainsi chaque valeur de sortie pour chacune des sous-régions et générer ainsi une carte de probabilité de contamination représentant chaque état de contamination pour chacune des sous-régions en utilisant chaque valeur de sortie, et (ii) d'appliquer chaque vecteur de pondération prédéfini à la carte de probabilité de contamination, afin de générer ainsi ledit degré de contamination d'image pour chacune des sous-régions.

# FIG. 1

# FIG. 2

| ACQUIRING INPUT IMAGE FROM CAMERA | S200 |

| DETERMINING WHETHER TO FURTHER PERFORM PROCESS FOR DETECTING CONTAMINATION | S210 |

| S221 — GENERATING DEGREE OF FRAME CONTAMINATION | GENERATING DEGREE OF FRAME VISIBILITY — S222 |

| CALCULATING DEGREE OF CALIBRATED CONTAMINATION AND DETERMINING WHETHER CONTAMINATION EXISTS | S230 |

# FIG. 3

ACQUIRING INPUT IMAGE FROM CAMERA — S300

ACQUIRING MOVEMENT INFORMATION — S310

S320
TRAVELED DISTANCE > PRESET TRAVELED DISTANCE — YES / NO

S330
ROTATED ANGLE > PRESET ROTATED ANGLE — YES / NO

MATCHING PREVIOUS FEATURES AND CURRENT FEATURES — S340

S350
RATIO OF MATCHED PREVIOUS-CURRENT FEATURES < PRESET MATCHED FEATURE RATIO — YES / NO

S360
FEATURE DISPARITY MEDIAN > PRESET FEATURE DISPARITY MEDIAN — YES / NO

TRANSMITTING INPUT IMAGE TO CONTAMINATION CALCULATING UNIT AND VISIBILITY CALCULATING UNIT — S370

TERMINATING PROCEESS FOR DETERMINING WHETHER CONTAMINATION EXISTS — S380

# FIG. 4

EP 4 524 905 B1

# FIG. 5

FIG. 6

**EP 4 524 905 B1**

**Patent documents cited in the description**

- KR 1020230122793
- KR 1020160048179
- KR 1020210034734
- JP 2008060874 A
- US 9319637 B
- KR 1020170140891

**Non-patent literature cited in the description**

- **DAVID EIGEN**. *Restoring an Image Taken through a Window Covered with Dirt or Rain*